Europäisches Patentamt

European Patent Office

Office européen des brevets

(19)

(11) Veröffentlichungsnummer: **0 328 988 B1**

(12) # EUROPÄISCHE PATENTSCHRIFT

(45) Veröffentlichungstag der Patentschrift:
21.11.91 Patentblatt 91/47

(51) Int. Cl.⁵: **A01D 34/73, A01D 34/82**

(21) Anmeldenummer: **89102029.9**

(22) Anmeldetag: **06.02.89**

(54) **Messerbalken für Rasenmäher.**

(30) Priorität: **18.02.88 DE 3805092**

(43) Veröffentlichungstag der Anmeldung:
**23.08.89 Patentblatt 89/34**

(45) Bekanntmachung des Hinweises auf die
Patenterteilung:
**21.11.91 Patentblatt 91/47**

(84) Benannte Vertragsstaaten:
**AT BE CH DE ES FR IT LI LU NL SE**

(56) Entgegenhaltungen:
**EP-A- 0 136 988**
**AU-B- 455 520**
**GB-A- 829 393**

(73) Patentinhaber: **Wolf-Geräte GmbH**
**Gregor-Wolf-Strasse 16 Postfach 860 und 880**
**W-5240 Betzdorf/Sieg (DE)**

(72) Erfinder: **Weid, Helmut**
**Am Koppelsberg 12**
**W-5241 Niederdreisbach (DE)**

(74) Vertreter: **Koch, Günther, Dipl.-Ing.**
**Patentanwälte Wallach, Koch, Dr. Haibach,**
**Feldkamp et al**
**P.O. Box 121120**
**W-8000 München 12 (DE)**

## Beschreibung

Die Erfindung bezieht sich auf einen Messerbalken für Rasenmäher, der an einer vertikalen Antriebswelle festlegbar ist und an seinen radial äußeren Enden Messer trägt, die über eine Schraubbefestigung auswechselbar festgelegt sind, wobei Trägerplatten der Messer über konische ineinandergreifende Drehführungen am Messerbalken reibungsschlüssig durch einen konzentrisch zur Drehführung angeordneten Schraubbolzen derart vorgespannt sind, daß die Messer beim Auftreten einer Überlast ausweichen können.

Ein solcher Messerbalken ist aus der AU-A-455520 bekannt. Durch die hier vorgesehene Drehführung soll erreicht werden, daß das Messer bei einem Aufprall auf einen festen Gegenstand drehend ausweichen kann und nach Überfahren des Hindernisses das Messer durch die auf dieses einwirkenden Zentrifugalkräfte wieder in die Ursprungslage zurückgeführt wird. Dieser Betriebszustand ist nur schwer zu verwirklichen, weil unter dem Gesichtspunkt eines zuverlässigen Mähvorganges die Drehbefestigung nicht zu locker sein darf, weil andernfalls kein einwandfreier Schnitt erzielt werden kann und andererseits bei einer zu hohen Reibungskraft eine Rückführung durch Zentrifugalkraft nicht mehr gewährleistet ist. Selbst wenn unter Verzicht auf die Streckung durch die Zentrifugalkräfte versucht würde, den Reibungsschluß so einzustellen, daß nur beim Auftreten einer Überlast ein Ausschwenken erfolgt, so wäre die Einstellung einer hierfür geeigneten Reibungskraft problematisch. Die Reibungskraft hängt zwar in erster Linie von der durch Anzug der Bolzenmutter bestimmten Spannkraft bzw. Normalkraft ab, wird jedoch außerdem wesentlich durch den Reibungskoeffizienten beeinflußt, der sich im Betrieb ändern kann. Es wird dann häufig ein Zurückschlagen der Messer schon dann erfolgen, wenn sich der Widerstand beim Schneiden sehr dichten Grases erhöht, oder umgekehrt wird bei zu strenger Einstellung das Ausschwenken nicht erfolgen, wenn sich das Messer in den Boden eingräbt oder harte Fremdkörper getroffen werden.

Der Erfindung liegt daher die Aufgabe zugrunde, einen gattungsgemäßen Messerbalken derart zu verbessern, daß auf einfache Weise ein vorbestimmtes Überlastdrehmoment eingestellt werden kann, welches die erstrebte Schutzfunktion gewährleistet, im Normalbetrieb jedoch einen sicheren Schnitt auch dichten Grases ermöglicht.

Gelöst wird die gestellte Aufgabe durch die im Kennzeichnungsteil des Patentanspruchs 1 angegebenen Merkmale. Dadurch, daß ein Abstand zwischen den gegenüberliegenden kreisrunden Plattenteilen vorhanden ist, können an dieser Stelle keine Reibungskräfte wirksam werden. Diese Reibungskräfte beschränken sich im wesentlichen auf die konische Drehführung. Durch den Formschlußeingriff zwischen der in Längsrichtung verlaufenden Sicke und der Rippe der Messerträgerplatte wird im wesentlichen das Drehmoment bestimmt, bei dem die das Messer tragende Platte zurückschlägt, wobei beim Zurückschlagen die konische Drehführung wirksam wird, die verhindert daß der Befestigungsbolzen abgeschert und das Messer abgeschleudert wird. Die Einstellung des Luftspaltes zwischen den sich gegenüberliegenden ebenen Flächen der Drehführung ist dabei mitbestimmend für die Einstellung des Auslösedrehmomentes, weil sich in diesem Spalt eine Verkantung einstellen kann, über die die Sicke auf der Rippe hochlaufen und dann bei elastischer Deformation abrutschen kann.

Es ist zwar durch die EP-A-0136988 bereits eine Drehsicherung für die an einem Messerbalken sitzenden Messer bekannt, wobei das mit einer ebenen Flächensektion versehene Messer auf einem ebenen flächig verlaufenden Teil am Ende des Messerbalkens durch den Schraubbolzen aufgezogen wird und ein vom Messerträger abgebogener Vorsprung in eine in Längsrichtung verlaufende Ausnehmung des Messerbalkens formschlüssig eingreift. Hierbei wird jedoch die Drehführung allein durch den die Verbindung herstellenden Schraubbolzen bewirkt, und dieser kann durch Aufschlag des Messers auf einen Stein abscheren, weil der Lochrand des Messerträgers unter ungünstigen Umständen direkt auf den Bolzen aufschlagen kann und ihn so abschert.

Weitere zweckmäßige Ausgestaltungen der Erfindung ergeben sich aus den Unteransprüchen.

Nachstehend wird ein Ausführungsbeispiel der Erfindung anhand der Zeichnung beschrieben. In der Zeichnung zeigen :

Fig. 1 eine Teilansicht eines erfindungsgemäß ausgebildeten Messerbalkens mit angeschraubten Messern ;

Fig. 2 einen Schnitt nach der Linie A-B gemäß Fig. 1 ;

Fig. 3 einen Schnitt nach der Linie C-D gemäß Fig. 1 ;

Fig. 4 einen Einzelansicht eines erfindungsgemäß ausgebildeten Messers.

Der Messerbalken (10) wird mit seinem Mittelloch (12) auf eine mit vertikaler Achse umlaufenden Antriebswelle eines Motorrasenmähers aufgesteckt und wird über eine Spannmutter auf dieser festgelegt. An beiden Enden sind auswechselbar Messer (14) befestigt, die am Vorlaufrand eine Schneide (16) aufweisen und nach dem Nachlaufende zu Windflügeln (18) nach oben gezogen sind, die das Gras in einen Auffangbehälter fördern.

Der sich beidseitig nach außen verjüngende Messerbalken weist nach beiden Seiten verlaufende Sicken (20) auf, die von einer mittleren, das Loch (12) umschließenden Ausprägung nach konischen Drehführungen (24) an den beiden Enden des zweiarmigen Messerbalkens (10) verlaufen. Konzentrisch zu jeder der konischen Drehführung ist an jedem Messerbalkenende ein Durchgangsloch (26) angeordnet, in das ein abgesetzter Abschnitt (28) einer Mutter (30) eingesetzt ist. Das Loch (26) und der abgesetzte Abschnitt (28) können polygonal ausgebildet sein, um eine Drehsicherung für die Mutter zu bilden. Vorzugsweise ist die Mutter (30) am Messerbalken angeschweißt, was eine einfache Montage gewährleistet und einen verkehrten Anbau des Messers (14) ausschließt.

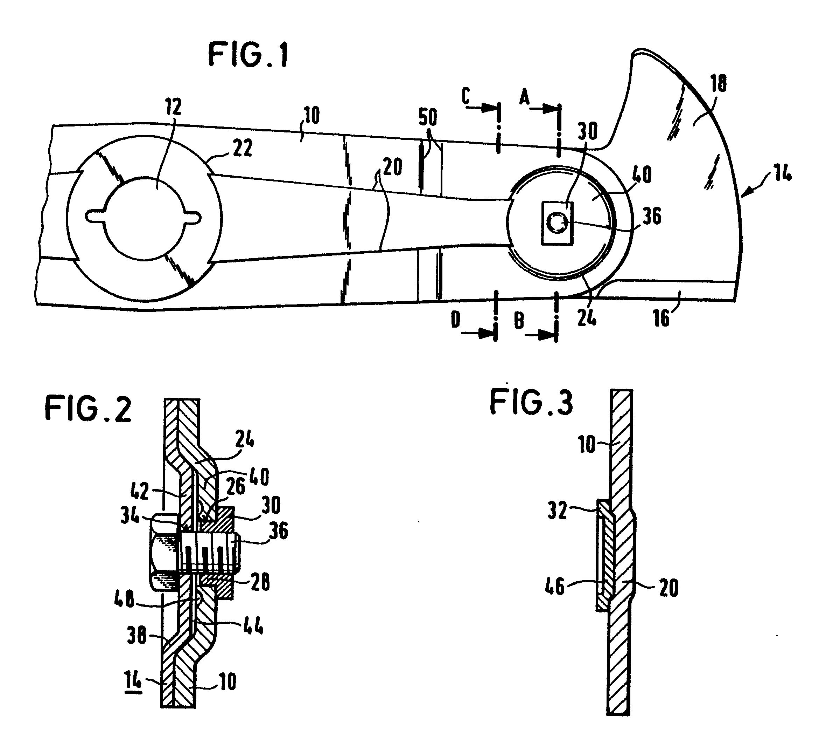

Jedes Messer (14) weist eine halbrunde Trägerplatte (32) auf, die ein konzentrisches Durchgangsloch (34) für einen Schraubbolzen (36) aufweist. Konzentrisch ist das Loch (34) von einer der Drehführung (24) entsprechenden konischen Drehführung (38) umgeben die, wie insbesondere aus Fig. 2 ersichtlich ist, in die Drehführung (24) des Messerbalkens einpaßt. Wie ebenfalls aus Figur 2 ersichtlich, weisen die beiden innerhalb der konischen Drehführung liegenden kreisrunden Plattenteile (40) bzw. (42) von Messerbalken bzw. Messer im zusammengebauten Zustand einen Abstand (44) zueinander auf. Dieser Abstand im Befestigungsbereich beträgt ca. 0,8 mm, und das Messer kann daher als Tellerfeder wirken, wodurch eine flache Schraubenkennlinie erreicht wird, und ein Sicherungselement wie Federring oder dergleichen entfallen kann.

Wie aus den Figuren 3 und 4 ersichtlich, weist die Messerträgerplatte (32) eine von der konischen Drehführung (38) in radialer Richtung verlaufende Rippe (46) auf, die formschlüssig in die Sicke (20) des Messerbalkens (10) eingreift.

Wie aus Fig. 2 ersichtlich, ist der Plattenteil (40) Messerbalkens (10) an der der Messerplatte (32) zugewandten Seite mit einer das Loch (26) umgebenden Nut (48) versehen, die eine Art Gelenk bildet und das Abdrehen des Messers beim Auftreten einer Überlast erleichtert. Die Nut (48) ergibt sich aus der Verzahnung von "Profil"-Stanzmuttern und entsteht beim Verprägen der Mutter. Stattdessen und/oder zusätzlich kann der Bolzen (36) als Dehnungsbolzen ausgebildet sein, der sich beim Auftreten einer axialen Überbeanspruchung dehnt und das Messer ausweichen läßt. Zu diesem Zweck kann der Bolzen (36) mit einer Umfangsnut versehen sein.

Das Messer (14) wird mit seiner konischen Drehführung (38) in der konischen Drehführung (24) des Messerbalkens zentriert und kann beim Auftreffen der Schneidkante (16) auf einen harten Gegenstand, beispielsweise einem Stein, ausweichen, ohne daß die Gefahr eines Abspringens und Herausschleuderns des Messers oder von Teilen hiervon besteht. Beim Auftreten eine Überlast kann nämlich die formschlüssig in die Sicke (20) des Messerbalkens eingreifende Rippe (46) des Messers ausgehoben werden und sich unter Reibungsschluß drehen.

Der Formschluß zwischen der Sicke (20) und Rippe (46) ist dabei so dimensioniert, daß auftretende Betriebskräfte sicher übertragen werden können, jedoch beim Auftreffen auf einen harten Gegenstand das Messer aus der Einrastung herausspringt und ausgelenkt wird.

Durch die Zentrierung über die konischen Drehführungen ergibt sich eine geringere Unwucht als bei herkömmlichen Schraubverbidungen, bei denen das unvermeidbare Schraubbolzenspiel keine exakt genaue Einstellung ermöglichte. Diese Anordnung hat auch noch den Vorteil, daß nur ein Teil der vom Messer eingeleiteten Belastung vom Befestigungselement aufgenommen wird, weil ein großer Teil der Belastung, insbesondere der Scherbelastung von der konischen Zentrierung aufgenommen wird und nicht von der Schraube übernommen werden muß, und es wird dadurch die Zentrierung aufgenommen wird und nicht von der Schraube übernommen werden muß, und es wird dadurch die Zentrierung nicht auf Scherung beansprucht.

Der Messerbalken ist, wie in Figur 1 angedeutet, an beiden Armen über Knicklinien (50) in sich verwunden, und zwar derart, daß die Vorlaufkante im Endabschnitt nach unten und die Nachlaufkante nach oben gezogen ist. Dadurch ergibt sich eine vorbestimmte Schrägstellung der Messer.

## Patentansprüche

1. Messerbalken (10) für Rasenmäher, der in seiner Mitte an einer vertikalen Anstriebswelle festlegbar ist und an seinem beiden radial äußeren Enden Messer trägt, die über eine Schraubbefestigung auswechselbar festgelegt sind, wobei Trägerplatten (32) der Messer (14) über konische ineinandergreifende Drehführungen (24, 38) am Messerbalken (10) reibungsschlüssig durch einen konzentrisch zur Drehführung angeordneten Schraubbolzen (36) derart vorgespannt sind, daß die Messer (14) beim Auftreten einer Überlast ausweichen können, dadurch gekennzeichnet, daß der Messerbalken (10) eine in Längsrichtung verlaufende Sicke (20) aufweist, in die formschlüssig eine Rippe (46) der Messerträgerplatten (32) einsteht, daß zwischen den einander gegenüberliegenden Flächen der das Bolzendurchgangsloch (34) umgebenden kreisrunden Plattenteile (40, 42) von Messerbalken (10) und Messerträgerplatte (32) ein Abstand (44) vorhanden ist, und daß plastisch und/oder elastisch verformbare Teile der Messerbefestigung bei Überlast den Formschluß zwischen Messerbalken, Sicke und Messerträgerrippe aufheben.

2. Messerbalken nach Anspruch 1, dadurch gekennzeichnet, daß der Messerbalken (10) und/oder die Messerträgerplatte (32) in dem das Bolzendurchgangsloch umschließenden Teil mit einer Nut (48) versehen ist.

3. Messerbalken nach Anspruch 1, dadurch gekennzeichnet, daß als Befestigungsbolzen ein Dehnungsbolzen (36) vorgesehen ist.

4. Messerbalken nach einem der Ansprüche 1 bis 3, dadurch gekennzeichnet, daß die Bolzenmutter (30) drehfest an der Messerträgerplatte (32) festgelegt ist.

5. Messerbalken nach Anspruch 4, dadurch gekennzeichnet, daß die Bolzenbefestigungsmutter (30) mit dem Messerbalken (10) verprägt oder verschweißt ist.

6. Messerbalken nach einem der Ansprüche 1 bis 5, dadurch gekennzeichnet, daß die Messerplatte hinten zu einem Windflügel (18) nach oben gezogen ist.

## Claims

1. Knife bar (10) for lawn mowers which is adapted to be secured in its centre to a vertical drive shaft and carries knives at its two radially outer ends which are replaceably secured via a screw mounting, carrier plates (32) of the knives (14) being biased via conical interengaging rotational guides (24, 38) on the knife beam (10) frictionally by a threaded bolt (36) arranged concentrically to the rotational guide in such a manner that the knives (14) can yield on occurrence of an overload, characterized in that the knife bar (10) comprises a longitudinally extending bead (20) into which in form-locking manner a rib (46) of the knife carrier plates (32) projects, that between the two oppositely disposed surfaces of the circular plate portions (40, 42) of knife bar (10) and knife carrier plate (32) surrounding the bolt hole (34) a space (44) is present and that plastically and/or elastically deformable portions of the knife securing under overload cancel the form locking between the knife bar, bead and knife carrier rib.

2. Knife bar according to claim 1, characterized in that the knife bar (10) and/or the knife carrier plate (32) is provided with a groove (48) in the portion surrounding the bolt hole.

3. Knife bar according to claim 1, characterized in that as securing bolt a strain bolt (36) is provided.

4. Knife bar according to any one of claims 1 to 3, characterized in that the bolt nut (30) is secured non-rotatably to the knife carrier plate (32).

5. Knife bar according to claim 4, characterized in that the bolt securing nut (30) is embossed or welded to the knife bar (10).

6. Knife bar according to any one of claims 1 to 5, characterized in that the knife plate is drawn upwardly rearwardly to form a wind vane (18).

## Revendications

1. Barre de coupe (10) pour tondeuses à gazon pouvant être assujettie, en son centre, à un arbre vertical d'entraînement et portant, à ses deux extrémités radialement externes, des lames verrouillées à demeure avec faculté de remplacement, par l'intermédiaire d'une fixation par boulons, des plaques (32) de support des lames (14) étant soumises sur la barre de coupe (10), par l'intermédiaire de pièces coniques (24, 38) de guidage rotatif mutuellement imbriquées, sous l'action d'un boulon (36) disposé concentriquement au guidage rotatif, à une précharge par frottement telle que les lames (14) puissent se dévier en souplesse lors de l'imposition d'une charge excessive, caractérisée par le fait que la barre de coupe (10) présente une moulure (20) s'étendant dans le sens longitudinal et dans laquelle vient se nicher, par concordance de formes, une nervure (46) des plaques (32) de support des lames ; par le fait qu'un interstice (44) est réservé entre les surfaces, mutuellement opposées, des zones aplaties (40, 42) de la barre de coupe (10) et de la plaque (32) de support de lame, lesdites zones étant circulaires et entourant le trou (34) de passage du boulon ; et par le fait que des parties de la fixation des lames, déformables plastiquement et/ou élastiquement, suppriment, en présence d'une charge excessive, l'assemblage par concordance de formes entre la barre de coupe, la moulure et la nervure des supports de lames.

2. Barre de coupe selon la revendication 1, caractérisée par le fait que la barre de coupe (10) et/ou la plaque (32) de support de lame est munie d'une gorge (48) dans la zone entourant le trou de passage du boulon.

3. Barre de coupe selon la revendication 1, caractérisée par le fait qu'un boulon à extension (36) est prévu en tant que boulon de fixation.

4. Barre de coupe selon l'une des revendications 1 à 3, caractérisée par le fait que l'écrou (30) associé au boulon est assujetti, avec verrouillage en rotation, à la plaque (32) de support de lame.

5. Barre de coupe selon la revendication 4, caractérisée par le fait que l'écrou (30) de fixation du boulon est relié, à ladite barre de coupe (10), par estampage ou par soudage.

6. Barre de coupe selon l'une des revendications 1 à 5, caractérisée par le fait que la plaque de coupe est prolongée postérieurement, vers le haut, pour former une aile (18).

# FIG.1

# FIG.2

# FIG.3

EP 0 328 988 B1